Europäisches Patentamt

European Patent Office

Office européen des brevets

(11) Publication number : **0 668 025 A1**

# (12) EUROPEAN PATENT APPLICATION

(21) Application number : 95850039.9

(22) Date of filing : 17.02.95

(51) Int. Cl.6 : **A23K 1/18,** A23K 1/00,
A23K 1/16

(30) Priority : **21.02.94 SE 9400584**

(43) Date of publication of application :
**23.08.95 Bulletin 95/34**

(84) Designated Contracting States :
AT BE CH DE DK ES FR GB GR IE IT LI LU MC
NL PT SE

(71) Applicant : **EWOS AKTIEBOLAG**
**Box 618**
**S-151 27 Södertälje (SE)**

(72) Inventor : **Gjerde, Leif Kare**
**Olav Sindresons vei 27**
**N-6900 Florö (NO)**
Inventor : **Toneby, Mark**
**Dal, Dalvägen**
**S-15394 Hölö (SE)**

(74) Representative : **Inger, Lars Ulf Bosson**
**L + U INGER Patentbyra AB**
**Garvaregatan 12**
**S-262 63 Ängelholm (SE)**

(54) **Lipid-coated fish feed.**

(57)     The present invention relates to a fish feed comprising proteins, carbohydrates, fat, vitamins, and trace elements, whereby the fish feed prepared is provided with a coating consisting of an edible oil, which is liquid at least at 40°C and comprising a saturated triglyceride and/or saturated fatty acid thereof, having a melting point of above 40°C in an amount of at least 0.05 % by weight of the total fat content and in an amount which is at least 0.1 % by weight of said coating.

EP 0 668 025 A1

## Technical field

The present invention relates to a fish feed, in particular a fish feed having a high fat content therein.

The object of the present invention is to obtain a possibility to incorporate fat into a fish feed in an efficient and safe way, and then in particular high amounts of fats.

## Background of the invention

The fish feed used today, which has been developed for feeding farmed fish, tends to comprise more and more fat, and the fat contents tends to be 22 to 33 % by weight or even above 40 % in so called high energy feed for feeding salmon and other fish. By incorporation of such a high amount of fat, however, storage problems arise as the fat contents tend to seep out, the feed is "sweatening" fat, and it is not unusual that free fat phase is recovered in the bottom of the sacks into which the feed has been distributed. This means a large quality problem. Further, it means that the fish does not become provided with the amount of fat intended at the feeding, as well as the feeding becomes complicated as the fish feed pellets, the form into which the fish feed is produced, tend not to be free flowing anymore but stick together, which makes the distribution in the automatic feeding machines used for feeding the fish, more difficult

The fish feed as such is based on proteins, usually fish meal, fat and carbohydrates, whereby the later are a carrier for the fat phase. Furthermore, vitamins, trace elements, and other suitable feed components, such as pigments, for the pigmentation of e.g. the salmon muscle, are present. By increasing the fat content the ingoing part of carbohydrates, which is normally decreased at the expense of the fat content, does not manage to bind the fat content in a sufficient amount, and thereby follows a risk for separation of the liquid fat phase, which normally consists of a fish oil, from the carbohydrates, in particular at higher temperatures such as during spring, summer and autumn.

There is thus a demand from the manufacturer of fish feed to be able to eliminate the separation of liquid fat phase from the fish feed.

## Description of the present invention

It has now surprisingly been shown possible to be able to solve this problem by means of the present invention which is characterized in that the feed stuff prepared is provided with a coating consisting of an edible oil, which is liquid at least at 40°C, and comprising a saturated triglyceride and/or a saturated fatty acid thereof, having a melting point above 40°C in an amount of at least 0.05 % by weight of the total fat content of the feed stuff and in an amount which is at least 0.1 % by weight of said coating.

By means of the present invention the separation of liquid fat can be inhibited with up to 90% or more compared to a feed stuff which has not been coated in the way given, in particular when feed stuffs very rich in fat (>30 % of fat) are intended.

The term edible fat defines every type of oil which is normally incorporated into fish feed, and then in particular fish oil such as menhaden oil, herring oil, cappelin oil, and other oils.

With saturated triglyceride and/or saturated fatty acid thereof, is intended hydrogenated rape seed oil, hydrogenated soya bean oil, hydrogenated sun flower oil, hydrogenated olive oil, hydrogenated palm oil, hydrogenated coco nut oil, glyceryl tristearate, glyceryl tripalmitate, stearic acid, palmitic acid, hydrogenated fish oil, tallow, and lard. These saturated triglycerides all have a melting point above 40°C and usually higher, close to 60°C or more.

The saturated triglyceride and/or saturated fatty acid thereof is added to the fish feed suitably in admixture with the fat which is part of the product, which fat to a substantial part, is added after extrusion or pelleting of the other feed components, such as proteins, carbohydrates, vitamins, trace elements, and optionally other feed stuff components. The saturated triglyceride and/or saturated fatty acid thereof is thereby at least 0.1 % by weight of the fat mixture added, suitably 0.9 to 3.6 % by weight of the fish oil which is the edible oil and which is coated onto the pelleted or extruded product. The triglyceride and/or saturated fatty acid thereof can be up to 10 % by weight of the oil mixture coated onto the feed and is the coating in accordance with above, and is up to 5 % by weight of the total fat content of the feed stuff.

The saturated triglyceride and/or fatty acid thereof, is present in solid form at ambient temperature (room temperature) and thereby the fat, in particular the fish oil, into which it is incorporated be heated to 40 to 85°C to admit dissolution of the saturated triglyceride and/or fatty acid thereof, therein. The coating using the fat phase including the triglyceride and/or saturated fatty acid thereof, should be carried out at an elevated temperature as well, as the viscosity otherwise will become so high that the penetration and absorption of the fat phase by the extrudate or pellets is blocked or reduced. The appearance of the final product is improved as well, by increasing the viscosity of the fat phase in the extrudate or pellets, whereby a better distribution of the fat phase in the feed stuff is obtained.

The invention will now be described more in detail with reference to some different tests made to investigate the efficiency of the treatment according to the invention.

The fish feed extrudate in the form of a pellet was tested in a kg-scale in the laboratory, whereby 5 kg batches where treated using fish oil according to a conventional recipe at 45 to 50°C on the one hand, and using hydrogenated rape seed oil, where the rape seed oil at first had been dissolved by heating to 60°C and then the combined fat phase had been cooled to about 50°C before application on the other hand.

Application of the pellets was done immediately after extrusion whereby pellets and oil were mixed for 2 min in a Walter Brucks granulation pan.

The different test products were then packed into polymer bags (195 x 340 mm) having a content of 0.5 kg or 1.5 kg and plastic bags were stored standing at ambient temperature and at 40°C for a desired time period. Then the bags were emptied and weighed (the empty weight had been registered previously), as well as the pellets were pressed against preweighed absorption papers. Hereby the amount of fat which had seeped out from the pellets during storage be determined as the sum of the two different values obtained from a weighing of the plastic bags on the one hand, and the weighing of the absorption papers on the other.

In another test the separation of the liquid fat phase from pellets was accelerated by placing pellets onto absorption papers, store these for a short time period, and then determine the amount of oil which had been freed.

Preweighed and marked discs of filter paper (x3) were placed in Petri dishes. Samples (about 5 g) of pellets were carefully weighed and placed in the centre of the filter paper discs. Samples of pellets were tested in three replicates. The covers were put onto each Petri dish and they were placed for storage at a suitable temperature (room temperature or 40°C). A control Petri dish containing three preweighed filter paper discs was stored as well under the prevailing conditions. The object of the control was to determine loss or absorption of moisture. After storage for 16 or 66 hrs the Petri dishes were removed and the pellets were carefully removed from the filter papers and these are once again weighed carefully.

Table 1

The result of tests storing in a plastic bag.

1 month at room temperature

The fish feed pellets contained 41.7 to 43.1 % of fat totally, whereby about 15 % (14.7 to 16.1 %) was added as fish oil in a first step, and then 27 % had been applied in the coating containing the rape seed oil. The coating can be applied in two steps in order to facilitate absorption.

| Sample | Loss of oil relative value |
| --- | --- |
| 0 %  rape seed oil[a] | 100[b] |
| 0,9 % rape seed oil | 11,5 |
| 1,8 % rape seed oil | 4,6 |
| 3,6 % rape seed oil | 2,7 |
| 7,2 % rape seed oil | 2,7 |

a) relates to the percentage of the total fat content

b) relative value 100 = 10.9 g of oil seeped out per kg of fish feed

Table 2

The results of tests on filter papers in Petri dishes
16 hrs at 40°C
The fish feed pellets contained 41.7 to 43.1 % of fat totally,
whereby about 15 % (14.7 to 16.1 %) was added as fish oil in a
first step, and then 27 % had been applied in the coating con-
taining the rape seed oil. The coating can be applied in two
steps in order to facilitate absorption.

| Sample | Loss of oil relative value |
|---|---|
| 0 % rape seed oil[a] | 100[b] |
| 0,9 % rape seed oil | 114 |
| 1,8 % rape seed oil | 67 |
| 3,6 % rape seed oil | 38 |
| 7,2 % rape seed oil | 31 |

a) relates to the percentage of the total fat content
b) relative value 100 = 58 g of seeped oil per kg fish feed

As evident from the above a very apparent reduction of the "sweatening" from the feed stuff is obtained when it is treated with a mixture of lipids containing a saturated triglyceride, in this case consisting of hydrogenated rape seed oil.

**Claims**

1. Fish feed comprising proteins, carbohydrates, fat, vitamins, and trace elements, **characterized** in that the fish feed prepared is provided with a coating consisting of an edible oil, which is liquid at least at 40°C and comprising a saturated triglyceride and/or saturated fatty acid thereof, having a melting point of above 40°C in an amount of at least 0.05 % by weight of the total fat content and in an amount which is at least 0.1 % by weight of said coating.

2. Fish feed according to claim 1, **characterized** in that hydrogenated rape seed oil, hydrogenated soya bean oil, hydrogenated sun flower oil, hydrogenated olive oil, hydrogenated palm oil, hydrogenated coco nut oil, glyceryl tristearate, glyceryl tripalmitate, stearic acid, palmitic acid, hydrogenated fish oil, tallow, and/or lard is used as saturated triglyceride and/or fatty acid thereof.

3. Fish feed according to claim 1-2, **characterized** in that the saturated triglyceride and/or saturated fatty acid thereof is up to 10 % by weight of the oil mixture applied.

4. Fish feed according to claims 1-3, **characterized** in that the saturated triglyceride is hydrogenated rape seed oil.

5. Fish feed according to claims 1-4, **characterized** in that the rape seed oil is 0.9 to 3.6 % by weight of the oil mixture applied.

6. Fish feed according to claims 1-5, **characterized** in that the fat contents is 22 to 45 % by weight of the final feed stuff.

7. Fish feed according to one or more of the preceding claims, **characterized** in that the rape seed oil is dissolved into the rest of the fat of the feed stuff.

**European Patent Office**

## EUROPEAN SEARCH REPORT

Application Number

EP 95 85 0039

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | GB-A-2 249 466 (AJINOMOTO CO. INC.)<br>* page 4, line 15 - page 5, line 10 *<br>* page 7, line 18 - page 8, line 2 *<br>* claims 1-5 *<br>--- | 1,2,6 | A23K1/18<br>A23K1/00<br>A23K1/16 |
| A | EP-A-0 284 143 (UNILEVER N.V. ET AL.)<br>* page 1, line 30 - line 43 *<br>--- | 1-4 | |
| A | DATABASE WPI<br>Week 9301<br>Derwent Publications Ltd., London, GB;<br>AN 93-005495<br>& JP-A-04 334 317 (FREUND IND. CO. LTD. ET AL.) , 20 November 1992<br>* abstract *<br>----- | 1 | |
| | | | **TECHNICAL FIELDS SEARCHED (Int.Cl.6)**<br><br>A23K |

The present search report has been drawn up for all claims

| Place of search | Date of completion of the search | Examiner |
|---|---|---|
| BERLIN | 2 May 1995 | Alvarez Alvarez, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document